# EUROPÄISCHE PATENTSCHRIFT

(11) **EP 1 400 001 B1**
(45) Veröffentlichungstag und Bekanntmachung des Hinweises auf die Patenterteilung: **22.03.2017**
(21) Anmeldenummer: 02748744.6
(22) Anmeldetag: 06.06.2002
(51) Int. Cl.: H02K 1/27, H02K 15/03

(54) **VERGOSSENES SEKUNDÄRTEIL FÜR ELEKTROMOTOR MIT PERMANENTMAGNETEN UND VORRICHTUNG ZU DESSEN ERSTELLUNG DAS EINE VERSCHIEBUNG DER MAGNETE VERHINDERT**
CAST SECONDARY PART FOR ELECTRIC MOTORS
PIECE SECONDAIRE SCELLEE POUR MOTEURS ELECTRIQUES

(30) Priorität: 28.06.2001 DE 10131117
(43) Veröffentlichungstag der Anmeldung: 24.03.2004
(73) Patentinhaber: Siemens Aktiengesellschaft, 80333 München (DE)
(72) Erfinder: HOPPE, Thomas, 85247 Schwabhausen/Stetten (DE); SAILER, Hermann, 85411 Hohenkammer (US)
(86) Internationale Anmeldenummer: PCT/EP2002/006245
(87) Internationale Veröffentlichungsnummer: WO 2003/003538

(56) Entgegenhaltungen:
- US-A- 4 973 872
- US-A- 5 004 577
- PATENT ABSTRACTS OF JAPAN vol. 015, no. 191 (E-1068), 16. Mai 1991 (1991-05-16) & JP 03 049544 A (AICHI EMERSON ELECTRIC CO LTD), 4. März 1991 (1991-03-04)
- PATENT ABSTRACTS OF JAPAN vol. 012, no. 337 (E-657), 12. September 1988 (1988-09-12) & JP 63 099751 A (HITACHI METALS LTD), 2. Mai 1988 (1988-05-02)
- PATENT ABSTRACTS OF JAPAN vol. 018, no. 641 (E-1639), 6. Dezember 1994 (1994-12-06) & JP 06 245472 A (FUJI ELELCTROCHEM CO LTD), 2. September 1994 (1994-09-02)
- PATENT ABSTRACTS OF JAPAN vol. 011, no. 113 (E-497), 9. April 1987 (1987-04-09) & JP 61 262057 A (TOSHIBA CORP), 20. November 1986 (1986-11-20)

## Beschreibung

Die Erfindung bezieht sich auf ein vergossenes Sekundärteil für Elektromotoren, ein Verfahren zu dessen Herstellung sowie eine Vorrichtung zur Durchführung des Verfahrens.

Sekundärteile für elektrische Synchronmotoren, die als Rotations- oder Linearmotoren ausgebildet sein können, weisen in der Regel auf einem Trägerelement aus magnetisierbarem Material und mehrere Permanentmagnete auf, die im Betrieb mit einem elektrisch gespeisten Primärteil zusammenwirken. Zum Schutz gegen Beschädigungen und Korrosion werden die Permanentmagnete in einen Vergußkörper aus beispielsweise Polyurethan oder Epoxyharz eingebettet (DE-A-199 36 064).

Bei dem bekannten Verfahren wird das mit Permanentmagneten bestückte Trägerelement in eine Form eingebracht, die anschließend mit Polyurethan oder Epoxyharz ausgegossen wird, gegebenenfalls bei erhöhtem Druck und erhöhter Temperatur, um vollständiges Eindringen der Vergußmasse in alle Hohlräume zu gewährleisten. Um ferner sicherzustellen, daß bei der unvermeidlichen Schrumpfung des Vergußkörpers bei der Aushärt- oder Reaktionszeit keine Risse im Material entstehen, wird gemäß der DE-A-199 36 064 vorgeschlagen, die später dem Primärteil zugewandten Flächen der Permanentmagnete vor dem Vergießen mit einem Faservlies zu bedecken.

Zwar können mit dem bekannten Verfahren zufriedenstellende Produktergebnisse erzielt werden, andererseits steigen die Anforderungen an die Maßhaltigkeit des Vergußkörpers. Darüber hinaus ergeben sich wegen der unvermeidbaren Aushärt- oder Reaktionszeiten der Vergußmasse entweder relativ lange Taktzeiten bzw. müssen mehrere Formen gleichzeitig in der Produktion verwendet werden.

In JP-A-03049544 wird ein Rotor offenbart, bei dem die Permanentmagnete in einem Vergusskörper thermoplastischer Kunststoffe eingebetet sind.

Demgegenüber liegt der Erfindung die Aufgabe zugrunde, ein Sekundärteil für Elektromotoren anzugeben, das in kurzen Taktzeiten herstellbar ist und sich durch Maßhaltigkeit des Vergußkörpers auszeichnet. Desweiteren soll ein Verfahren sowie eine Vorrichtung zur Durchführung des Verfahrens zur Herstellung eines erfindungsgemäßen Sekundärteils angegeben werden.

Die Lösung dieser Aufgabe erfolgt durch ein Verfahren mit den Merkmalen des Patentanspruchs 1 bzw. durch eine Vorrichtung gemäß Anspruch 6 ; die abhängigen Ansprüche beziehen sich auf vorteilhafte Ausgestaltungen der Erfindung.

Die Erfindung geht von der überraschenden Erkenntnis aus, daß trotz der hohen Temperaturen beim Einspritzen thermoplastischer Kunststoffe (200° und mehr), die über den Curie-Punkten mancher Ferromagnetika liegen, keine wesentliche Beeinträchtigung der Magnetisierung der Permanentmagnete im fertigen Sekundärteil feststellbar ist; dies widerlegt ein in Fachkreisen verbreitetes Vorurteil.

Bei der Herstellung von Sekundärteilen mit Vergußkörpern aus thermoplastischen Kunststoffen können alle Vorteile der auf anderen Gebieten bewährten Spritzgießtechnik ausgenutzt werden. So sind kurze Taktzeiten möglich, da keine Reaktions- oder Aushärtezeiten abzuwarten sind, wobei nur ein Werkzeug (Vergußform) nötig ist. Durch eine Nachdruckregelung kann einer Schrumpfung des Vergußkörpers entgegengewirkt werden, so daß die fertigen Sekundärteile eine ausgezeichnete Maßhaltigkeit aufweisen, das heißt geringe Variationen in den Abmessungen.

Die Entsorgung der Sekundärteile am Ende der Standzeit gestaltet sich einfacher, weil thermoplastische Kunststoffe oder monomere Materialien im Gegensatz zu PUR- oder Epoxyharzen einfach recycliert werden können. Desweiteren sind thermoplastische Kunststoffe kostengünstiger als PUR-Vergußmassen.

Vorteilhafterweise werden die Sekundärteile in einer an sich bekannten Spritzgießvorrichtung mit einem Formwerkzeug und einer Spritzgießeinheit hergestellt. Dabei werden vorzugsweise die Permanentmagnete auf dem Trägerelement vormontiert, und anschließend wird das Trägerelement mit den Permanentmagneten in den Formhohlraum des Formwerkzeuges eingebracht, und der Vergußkörper wird gegossen. Alternativ können auch nur die Permanentmagnete in dem Formhohlraum positioniert und in den Vergußkörper eingebettet werden. Der so gebildete Vergußkörper kann anschließend auf ein geeignetes Trägerelement aufgebracht werden.

Grundsätzlich ist es möglich magnetische Materialien für das Formwerkzeug zu verwenden, wenn auch nichtmagnetische Materialien (keramische Materialien, Edelstahl, etc.) wegen der leichteren Handhabbarkeit im Produktionsprozeß vorzuziehen sind.

Um ein Verschieben der Permanentmagnete aufgrund von Magnetkräften und aufgrund von Strömungskräften während des Einspritzvorgangs zu verhindern, sind vorzugsweise Positionierelemente im Formwerkzeug vorgesehen, die zu Beginn des Einspritzens die Magnete in Position halten und später, beispielsweise während der Nachdruckphase, aus dem Formhohlraum zurückgezogen werden können, damit in dieser Phase die entstehenden Resthohlräume aufgefüllt werden können.

Die Handhabung der Sekundärteile, der Trägerelemente mit Permanentmagneten und/oder der Permanentmagnete erfolgt vorzugsweise über schaltbare und/oder umpolbare Elektromagnete.

Lunkerfreie und gleichzeitig dünne Oberflächen können durch Einsatz einer Prägefunktion von Spritzgießmaschinen gewährleistet werden.

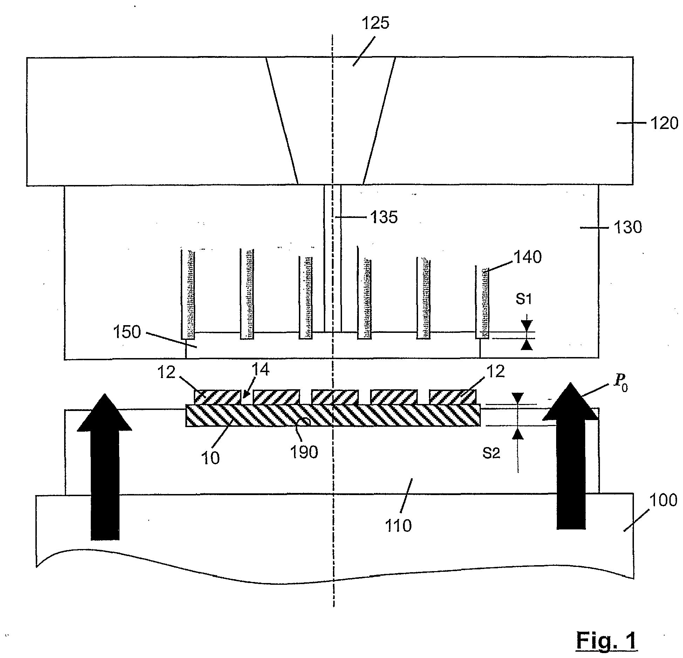

Ein Ausführungsbeispiel der Erfindung wird anhand der Figuren 1 bis 4 dargestellt, die ein Formwerkzeug bei verschiedenen Schritten zur Herstellung eines Sekundärteils für einen Linearmotor in schematischer Seitenansicht darstellen.

Gemäß Figur 1 trägt eine bewegliche Formaufspannplatte 100 eine erste Formhälfte 110, und auf einer festen Formaufspannplatte 120 ist eine zweite Formhälfte 130 montiert. In der feststehenden Aufspannplatte 120 ist ein Düsenkanal 125 ausgebildet, der in einen Angußkanal 135 in der zweiten Formhälfte 130 mündet. Der Angußkanal 135 seinerseits mündet in eine Kavität 150 in der zweiten Formhälfte 130. Die zweite Formhälfte 130 trägt desweiteren Positionierstifte 140, die in die Kavität 150 hineinbewegt bzw. aus ihr herausbewegt werden können.

Die erste Formhälfte 110 umfaßt eine Ausnehmung 160 zur Aufnahme eines Trägerelementes 10. Dieses Trägerelement 10 ist eine an sich bekannte Trägerplatte aus magnetisierbarem Material, auf der quaderförmige Magnetelemente 12 linear mit Zwischenräumen 14 in an sich bekannter Weise angeordnet sind. Vorzugsweise sind die Permanentmagnete durch Klebung od. dgl. vorfixiert.

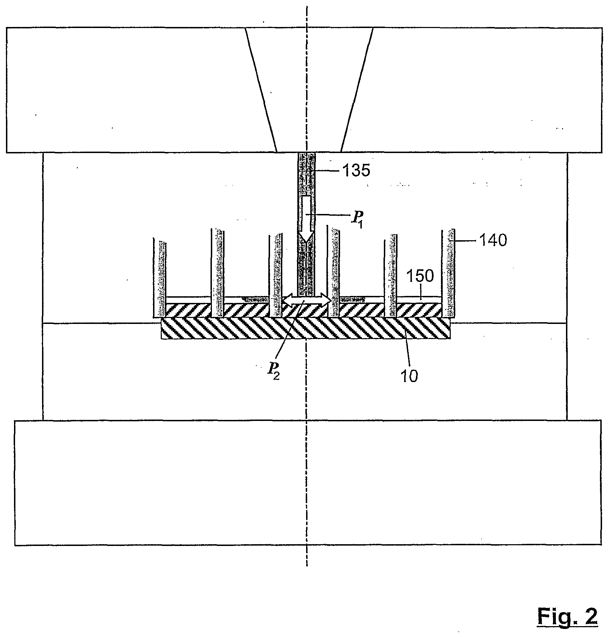

Nachdem die Trägerplatte 10 mit den darauf angeordneten Permanentmagneten 12 in die Ausnehmung 160 eingebracht wurde, beispielsweise mittels eines Handhabungsgerätes mit Elektromagneten, wird das Formwerkzeug geschlossen, wie durch die Pfeile P₀ in Figur 1 angedeutet ist. Dabei werden die Positionierelemente 140, die vorzugsweise runde oder quadratische Querschnitte aufweisen, in die in Figur 2 dargestellte Positionen verschoben, in denen die Enden der Positionierstifte in die Zwischenräume 14 zwischen den Permanentmagneten bzw. seitliche des ersten und letzten Magneten der Reihe angeordnet sind und auf dem Trägerelement 10 aufliegen.

In den Figuren ist jeweils nur eine Ebene von Positionierelementen 140 dargestellt; um ein Verkippen der Permanentmagneten 12 gegeneinander zu verhindern, sind entlang der Längserstreckung der Permanentmagneten 12 (normal zur Zeichnungsebene) weitere Positionierstifte vorgesehen. Desweiteren können an den jeweiligen Stirnseiten der Permanentmagnete 12 Positionierstifte vorgesehen sein, die ein Verschieben der Magnete in Längsrichtung verhindern.

Neben der Aufgabe, die Permanentmagnete zu fixieren, bewirken die Positionierelemente 140 ferner, daß das Trägerelement 10 in die Ausnehmung 180 der Formhälfte 110 gepreßt wird.

Dadurch wird das Trägerelement 10 in Position gehalten, und es kann verhindert werden, daß (bei Verwendung magnetischer Materialien für die Formhälfte 130) das Trägerelement 10 mit den Permanentmagneten 12 zu dieser Formhälfte "überschnappt".

Nach vollständigem Verschließen des Formwerkzeugs wird über eine Einspritzdüse (nicht dargestellt) einer Spritzgießmaschine Thermoplastkunststoff über den Düsenkanal 125 und den Einspritzkanal 135 in die Kavität 150 eingespritzt, wie durch den Pfeil P₁ angedeutet ist, und verteilt sich über den Oberflächen der Permanentmagnete 12 (P₂) sowie im Bereich der Zwischenräume 14 zwischen den Positionierstiften 140 bzw. Permanentmagneten.

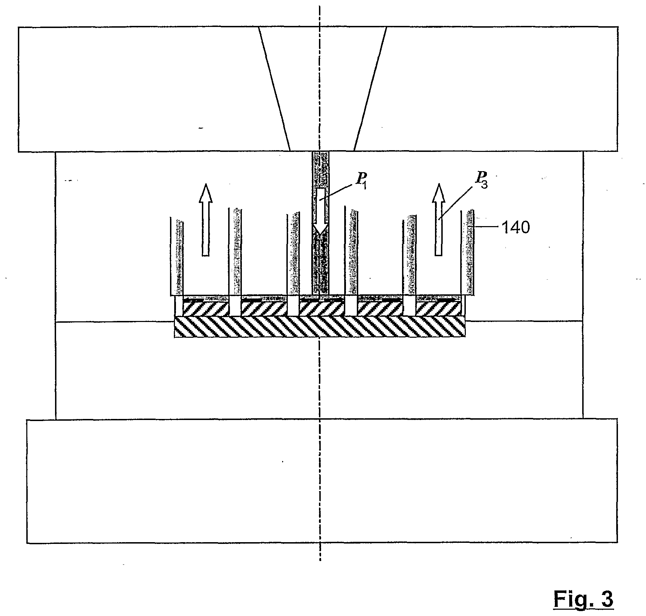

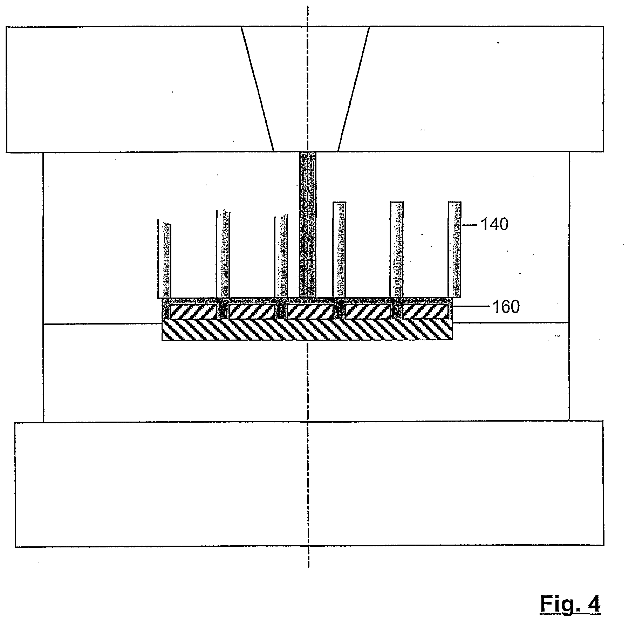

Nachdem die Kavität 150 und damit auch die Zwischenräume, die von den Seiten der Permanentmagnete und den Positionierstiften 140 begrenzt werden, mit Kunststoffmaterial gefüllt sind, werden die Positionierstifte 140 aus der Kavität zurückgezogen (P₃ in Figur 3), und in einer Nachdruckphase werden die so entstehenden Resthohlräume aufgefüllt (Figur 4).

Anschließend wird die Form geöffnet, das fertige Sekundärteil mit ausgebildetem Vergußkörper 160 wird entnommen, vorzugsweise mit einem Handhabungsgerät mit schaltbaren Elektromotoren, und der Zyklus kann erneut beginnen.

Vorstehend wurde die Herstellung eines Sekundärteils für einen Linearmotor dargestellt; grundsätzlich ist die erfindungsgemäße Verfahrensweise auch zur Herstellung von Sekundärteilen für Rotationsmotoren anwendbar.

## Patentansprüche

1. Verfahren zum Herstellen eines Vergusskörpers (160) eines Sekundärteils für einen Motor mit den Schritten:
Positionieren von Permanentmagneten (12) in dem Formhohlraum (150) eines Spritzgießwerkzeugs (110, 130) und Auffüllen des Formhohlraums mittels einer Spritzgießeinheit, **dadurch gekennzeichnet, dass** man in den Formhohlraum bewegbare Positionierelemente (140) zwischen den Permanentmagneten anordnet, wobei man nach dem Auffüllen des Formhohlraums die Positionierelemente (140) aus dem Formhohlraum (150) entfernt und die dadurch entstehenden Leerstellen durch einen Nachfüllvorgang auffüllt.

2. Verfahren nach Anspruch 1, **dadurch gekennzeichnet, dass** man den Formhohlraum (150) mit thermoplastischem Kunststoff auffüllt.

3. Verfahren nach Anspruch 1 oder 2, **dadurch gekennzeichnet, dass** man die Permanentmagnete (12) auf einem Trägerelement (10) anordnet und dann den Vergusskörper (160) an dem Trägerelement (10) anspritzt.

4. Verfahren nach einem der Ansprüche 1 bis 3, **dadurch gekennzeichnet, dass** der Nachfüllvorgang die Nachdruckphase des Spritzgießvorgangs umfasst.

5. Verfahren nach einem der Ansprüche 1 bis 4, **dadurch gekennzeichnet, dass** man am Ende des Auffüllens oder danach einen Prägevorgang durchführt.

6. Vorrichtung zum Herstellen von Sekundärteilen für Motoren, wobei in den Sekundärteilen Permanentmagnete (12) in einem Vergusskörper (160) eingebettet sind, mit mindestens zwei Formhälften (110, 130), die eine verschließbare Kavität bilden, wobei mindestens eine der Formhälften (130) Positionierelemente (140) trägt, wobei die Positionierelemente zwischen einer ersten Position, in der sie in die Kavität ragen und zur Fixierung der Permanentmagnete (12) dienen, und einer zweiten Position verschiebbar sind.

7. Vorrichtung nach Anspruch 6, **dadurch gekennzeichnet, dass** die Formhälften nichtmagnetische Materialien aufweisen.

8. Vorrichtung nach Anspruch 7, **dadurch gekennzeichnet, dass** die Positionierelemente (140) nichtmagnetische Materialien aufweisen.

9. Verwendung einer Spritzgießmaschine mit einer Vorrichtung nach einem der Ansprüche 6 bis 8.

## Claims

1. Method for manufacturing a casting element (160) of a secondary part for a motor having the steps:
positioning permanent magnets (12) in the mould cavity (150) of an injection moulding tool (110, 130) and filling the mould cavity using an injection moulding unit,
**characterised in that**
positioning elements (140) which can move are arranged in the mould cavity between the permanent magnets, wherein after filling the mould cavity the positioning elements (140) are removed from the mould cavity (150) and the empty spaces produced as a result are filled using a refill process.

2. Method according to claim 1, **characterised in that** the mould cavity (150) is filled with thermoplastic resin.

3. Method according to claim 1 or 2, **characterised in that** the permanent magnets (12) are arranged on a carrier element (10) and the casting element (160) is then injected onto the carrier element (10).

4. Method according to one of claims 1 to 3, **characterised in that** the refill process comprises the holding pressure phase of the injection moulding process.

5. Method according to one of claims 1 to 4, **characterised in that** a stamping process is performed at the end of the fill process or thereafter.

6. Device for manufacturing secondary parts for motors, wherein in the secondary parts permanent magnets (12) are embedded in a casting element (160), having at least two mould halves (110, 130), which form a closable cavity, wherein at least one of the mould halves (130) carries positioning elements (140), wherein the positioning elements can be moved between a first position, in which they project into the cavity and serve to fix the permanent magnets (12), and a second position.

7. Device acceding to claim 6, **characterised in that** the mould halves have non-magnetic materials.

8. Device according to claim 7, **characterised in that** the positioning elements (140) have non-magnetic materials.

9. Use of an injection moulding machine with a device according to one of claims 6 to 8.

## Revendications

1. Procédé de fabrication d'une pièce ( 160 ) coulée d'une partie secondaire d'un moteur, comprenant les stades :
mise en position d'aimants ( 12 ) permanents dans l'empreinte ( 150 ) d'un outil ( 110, 130 ) de moulage par injection et remplissage de l'empreinte au moyen d'une unité de moulage par injection,
**caractérisé en ce que**
l'on met, entre les aimants permanents, des éléments ( 140 ) de mise en position, mobiles dans l'empreinte, dans lequel, après le remplissage de l'empreinte, on retire les éléments ( 140 ) de mise en position de l'empreinte ( 150 ) et on remplit les espaces vides ainsi créés par une opération de re-remplissage.

2. Procédé suivant la revendication 1,
**caractérisé en ce que**
l'on remplit l'empreinte ( 150 ) de matière plastique thermoplastique.

3. Procédé suivant la revendication 1 ou 2,
**caractérisé en ce que**
l'on met les aimants ( 12 ) permanents sur un élément ( 10 ) de support et **en ce qu'**ensuite on injecte la pièce ( 160 ) de coulée sur l'élément ( 10 ) de support.

4. Procédé suivant l'une des revendications 1 à 3,
**caractérisé en ce que**
l'opération de re-remplissage comprend la phase de maintien en pression de l'opération de moulage par injection.

5. Procédé suivant l'une des revendications 1 à 4,
**caractérisé en ce que**
à la fin du remplissage ou ensuite, on effectue une opération de gaufrage.

6. Dispositif de fabrication de parties secondaires de moteurs, dans lequel, dans les parties secondaires, des aimants ( 12 ) permanents sont incorporés dans une pièce ( 160 ) de coulée, comprenant au moins deux moitiés ( 110, 130 ) de moule, qui forment une cavité pouvant être fermée, au moins l'une des moitiés ( 130 ) de moule portant des éléments ( 140 ) de mise en position, les éléments de mise en position pouvant être déplacés entre une première position dans laquelle ils pénètrent dans la cavité et servent à immobiliser les aimants ( 12 ) permanents et une deuxième position.

7. Dispositif suivant la revendication 6,
**caractérisé en ce que**
les moitiés de moule ont des matériaux amagnétiques.

8. Dispositif suivant la revendication 7,
**caractérisé en ce que**
les éléments ( 140 ) de mise en position ont des matériaux amagnétiques.

9. Utilisation d'une machine de moulage par injection, comprenant un dispositif suivant l'une des revendications 6 à 8.
